# EUROPEAN PATENT SPECIFICATION

(11) **EP 2 032 807 B1**
(45) Date of publication and mention of the grant of the patent: **21.01.2015**
(21) Application number: 07760027.8
(22) Date of filing: 03.04.2007
(51) Int. Cl.: F01N 3/00, F01N 3/025, F02D 41/00

(54) **METHOD AND APPARATUS FOR OPERATING AN EMISSION ABATEMENT SYSTEM**
VERFAHREN UND VORRICHTUNG FÜR DEN BETRIEB EINES EMISSIONSVERMINDERUNGSSYSTEMS
PROCÉDÉ ET APPAREIL POUR OPÉRER UN SYSTÈME DE RÉDUCTION D'ÉMISSION

(30) Priority: 07.04.2006 US 790180 P
(43) Date of publication of application: 11.03.2009
(73) Proprietor: Faurecia Emissions Control Technologies, USA, LLC, Columbus, Indiana 47201 (US)
(72) Inventor: KHADIYA, Navin, Columbus, IN 47201 (US)
(74) Representative: Jones, John Bryn
(86) International application number: PCT/US2007/065861
(87) International publication number: WO 2007/118078

(56) References cited:
- EP-A2- 1 158 143
- US-A- 4 651 524
- US-A1- 2006 021 331
- US-B2- 6 708 486
- US-B2- 6 989 045
- US-B2- 7 025 810

## Description

### FIELD OF THE DISCLOSURE

The present disclosure relates generally to an emission abatement device, and more particularly to a method of operating an emission abatement device including a regeneration device for particulate filters.

### BACKGROUND

Untreated internal combustion engine emissions (e.g., diesel emissions) include various effluents such as NOₓ, hydrocarbons, and carbon monoxide, for example. Moreover, the untreated emissions from certain types of internal combustion engines, such as diesel engines, also include particulate carbon-based matter or "soot". Federal regulations relating to soot emission standards are becoming more and more rigid thereby furthering the need for devices and/or methods which remove soot from engine emissions.

The amount of soot released by an engine system can be reduced by the use of an emission abatement device such as a filter or trap. Such a filter or trap is periodically regenerated in order to remove the soot therefrom. The filter or trap may be regenerated by use of a burner to burn the soot trapped in the filter. The use of a burner to burn soot raises the temperatures of exhaust gases flowing through the engine system, which are eventually released into the atmosphere.

The documents US 2006/0021 331 A1 and US 6 708 486 B2 disclose such exhaust gas treatment devices.

### SUMMARY

According to one aspect of the disclosure, a method for operating an emission abatement system may include determining if a particulate filter needs to be regenerated and generating a signal in response thereto. In response to the generation of the signal, a operation of internal combustion engine may be adjusted to increase the oxygen content in exhaust gases generated by the engine. The exhaust gases may be advanced to a fuel-fired burner. Heat may be generated with the fuel-fired burner to combust soot trapped in a particulate filter.

According to another aspect of the disclosure, an emission abatement assembly may comprise an internal combustion engine, a particulate filter, a fuel-fired burner, and a controller. The fuel-fired burner may be positioned upstream of the particulate filter. The controller may be electrically coupled to the internal combustion engine and the fuel-fired burner. The controller may comprise a processor and a memory device electrically coupled to the processor. The memory device have may have a plurality of instructions stored therein that may be executed by the processor. The execution of the instructions may cause the processor to determine if the particulate filter needs to be regenerated and generate a control signal in response thereto. The execution of the instructions may further cause the processor to adjust the operation of the internal combustion engine to increase the oxygen content in exhaust gases generated by the engine in response to the generation of the control signal. The execution of the instructions may also cause the processor to operate the fuel-fired burner to generate heat to combust soot trapped in the particulate filter in response to the generation of the control signal.

### BRIEF DESCRIPTION OF THE DRAWINGS

FIG. 1 is a diagrammatical schematic of an exemplary embodiment of an emission abatement system.
FIG. 2 is a diagrammatical schematic of another exemplary embodiment of an emission abatement system.
FIG. 3 is a diagrammatical schematic of another exemplary embodiment of an emission abatement system.
FIG. 4 is a diagrammatical schematic of another exemplary embodiment of an emission abatement system.

### DETAILED DESCRIPTION OF THE DRAWINGS

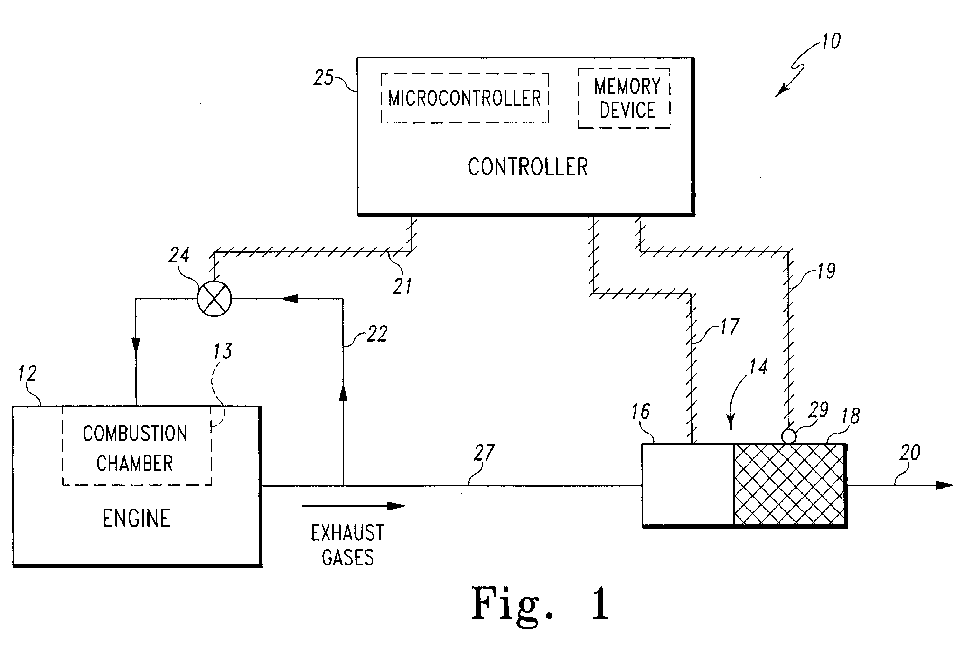

As will herein be described in more detail, an emission abatement assembly 10 for use with an internal combustion engine, such as a diesel engine 12, includes a soot abatement assembly 14. As shown in FIG. 1, the soot abatement assembly 14 has a fuel-fired burner 16 and a particulate filter 18, respectively. The fuel-fired burner 16 is positioned upstream (relative to exhaust gas flow from the engine represented by the arrows in FIG. 1) from the particulate filter 18. During operation of the engine 12, exhaust gases flow through the particulate filter 18 thereby trapping soot in the filter 18. Treated exhaust gases are released into the atmosphere or directed to other downstream (relative to exhaust gas flow) emission abatement devices through exhaust outlet 20. From time to time during operation of the engine, the fuel-fired burner 16 is selectively operated to regenerate the particulate filter 18.

When operated, the fuel-fired burner 16 receives a supply of fuel to produce a flame that heats exhaust gases flowing through an exhaust line 27. The heated exhaust gases are advanced downstream to the particulate filter 18 and ignite the soot trapped therein. The fuel-fired burner 16 must sustain a flame capable of heating the exhaust gases flowing therethrough to a temperature high enough to ignite the soot in the particulate filter 18. In order to achieve a sufficient temperature, the fuel-fired burner 16 requires a sufficient amount of oxygen for combustion, and thus the heating of the exhaust gases. However, exhaust gases produced by an engine such as the engine 12 during typical operation may not contain enough oxygen to allow the fuel-fired burner 16 to reach regeneration temperatures. Supplemental air supplies have been previously used, which may be configured along an exhaust path to provide air to a fuel-fired burner for combustion. However, the operation of the engine 12 may be adjusted by methods described herein to produce exhaust gases containing a sufficient amount of oxygen supplied to the fuel-fired burner 16 for regeneration of the filter 18. Once the fuel-fired burner 16 is activated, it begins to produce heat. Such heat is directed downstream by the exhaust gases and into contact with the upstream face of the particulate filter 18. The heat ignites and bums soot particles trapped in the filter substrate thereby regenerating the particulate filter 18.

The particulate filter 18 may be any type of commercially available particulate filter. For example, the particulate filter 18 may be embodied as any known exhaust particulate filter such as a "deep bed" or "wall flow" filter. Deep bed filters may be embodied as metallic mesh filters, metallic or ceramic foam filters, ceramic fiber mesh filters, and the like. Wall flow filters, on the other hand, may be embodied as a cordierite or silicon carbide ceramic filter with alternating channels plugged at the front and rear of the filter thereby forcing the gas advancing therethrough into one channel, through the walls, and out another channel. Moreover, the filter substrate may be impregnated with a catalytic material such as, for example, a precious metal catalytic material. The catalytic material may be, for example, embodied as platinum, rhodium, palladium, including combinations thereof, along with any other similar catalytic materials. Use of a catalytic material lowers the temperature needed to ignite trapped soot particles. Illustratively, heat in the range of 600-650 degrees Celsius may be sufficient to regenerate a non-catalyzed filter, whereas heat in the range of 300-350 degrees Celsius may be sufficient to regenerate a catalyzed filter.

In one exemplary embodiment, regeneration of the particulate filter 18 may take only a few minutes. Moreover, it should be appreciated that regeneration of the particulate filter 18 may be self-sustaining once initiated by heat from the fuel-fired burner 16, respectively. Specifically, once the filter 18 is heated to a temperature at which the soot particles trapped therein begin to ignite, the ignition of an initial portion of soot particles trapped therein can cause the ignition of the remaining soot particles much in the same way a cigar slowly bums from one end to the other. In essence, as the soot particles "bum," an amount of heat is released in the "burn zone." Locally, the soot layer (in the burn zone) is now much hotter than the immediate surroundings. As such, heat is transferred to the as yet un-ignited soot layer downstream of the burn zone. The energy transferred may be sufficient to initiate oxidation reactions that raise the un-ignited soot to a temperature above its ignition temperature. As a result of this, heat from the fuel-fired burner 16 may only be required to commence the regeneration process of the filter 18 (i.e., begin the ignition process of the soot particles trapped therein).

As shown in FIG. 1, one method of supplying sufficient oxygen for regeneration of the filter 18 includes the engine 12 being configured for exhaust gas recirculation (EGR). In this exemplary embodiment, an EGR line 22 connects the exhaust line 27 and the engine 12 to one another. The EGR line 22 allows a portion of exhaust gases to be recirculated into the engine intake (not shown) along with drawn-in combustion air and ultimately into the combustion chamber 13 of engine 12, which reduces the amount of emissions present in exhaust gases exiting the engine 12. However, in operation, the amount of recirculated exhaust gases supplied to the engine 12 replaces a corresponding amount of the combustion air supplied. This causes less oxygen to be present in the combustion chamber 13, which results in less oxygen being present in the exhaust gases generated by the engine 12.

In this exemplary embodiment, an EGR valve 24 is shown disposed along the EGR line 22 between the exhaust line 27 and the engine 12. The valve 24 can be operated to control the amount of recirculated exhaust gases supplied to engine 12. When the valve 24 is operated to reduce the amount of exhaust gases supplied to the combustion chamber 13 of the engine 12, more air can be supplied to the combustion chamber 13 through the intake of the engine 12. Allowing more air, in contrast to exhaust gases, to enter the combustion chamber 13 of the engine 12 will generate exhaust gases exiting the engine 12 containing more oxygen than that of exhaust gases generated with the valve 24 being fully open. This allows more oxygen to be supplied to the fuel-fired burner 16 for regeneration of the filter 18. The valve 24 may be completely closed to allow only air and fuel to be present in the combustion chamber 13 for combustion.

As shown in FIG. 1, a controller 25 may be responsible for interpreting electrical signals sent by sensors associated with the emission abatement assembly 10 (and in some cases, the engine 12) and for activating electronically-controlled components associated with the emission abatement assembly 10. For example, the controller 25 may be operable to, amongst many other things, determine when the particulate filter 18 of the soot abatement assembly 14 is in need of regeneration, calculate and control the amount of fuel to be introduced into the fuel-fired burner 16, determine the temperature in various locations within the soot abatement assembly 14, operate numerous air and fuel valves, and communicate with an engine control unit (not shown) associated with the engine 12.

To do so, the controller 25 includes a number of electronic components commonly associated with electronic units utilized in the control of electromechanical systems. For example, the controller 25 may include, amongst other components customarily included in such devices, a processor such as a microprocessor or microcontroller and a memory device such as a programmable read-only memory device ("PROM") including erasable PROM's (EPROM's or EEPROM's). The memory device is provided to store, amongst other things, instructions in the form of, for example, a software routine (or routines) which, when executed by the processor, allows the controller 25 to control operation of the emission abatement assembly 10. The controller 25 may also be configured to receive signals from either analog or digital sensors used in the emission abatement assembly 10.

The controller 25 may control operation of the fuel-fired burner 16 through a control line 17. In particular, the controller 25 may control the amount of fuel injected into the fuel-fired burner 16 by controlling the appropriate control signals on the control line 17. The memory device may store the fuel quantities necessary for the regeneration of the filter 18. This allows controller 25 to ensure that the appropriate amount of fuel is used for producing sufficient heat to ignite the soot in the filter 18. The controller 25 can determine if regeneration of the filter 18 is required through a sensor 29. The sensor 29 may sense the pressure drop across the filter 18 to determine if regeneration is necessary and transmit a signal indicating such through a control line 19 to the controller 25. When the particulate filter 18 is to be regenerated, the controller 25 may control the valve 24 through a control line 21 to reduce the amount of recirculated exhaust gases supplied to the combustion chamber 13, allowing the oxygen content of the exhaust gases supplied to the fuel-fired burner 16 to increase. It should be appreciated that the control scheme utilized to initiate filter regeneration may be designed in a number of different manners. For example, a timing-based control scheme may be utilized in which the regeneration of the particulate filter 18 is commenced as a function of time. For instance, regeneration of the particulate filter 18 may be performed at predetermined timed intervals.

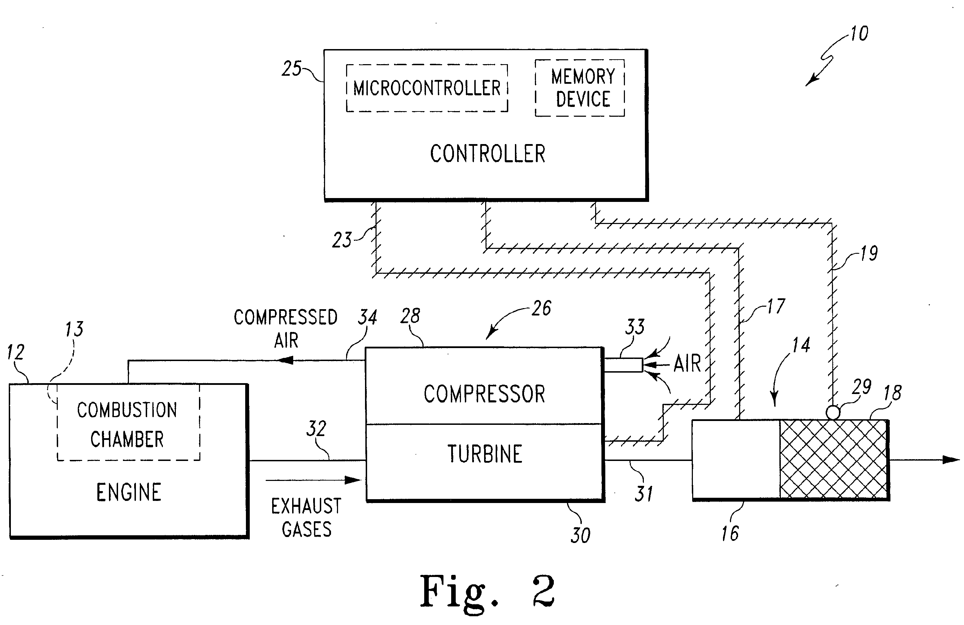

FIG. 2 shows another exemplary embodiment of the emission abatement system 10. In this illustrative embodiment, a turbocharger 26 selectively supplies air to the combustion chamber 13 of engine 12. Similar to that shown in FIG. 1, the exemplary embodiment of FIG. 2 is configured to increase the amount of oxygen in the exhaust gases allowing the fuel-fired burner to heat the exhaust gases flowing through the exhaust system to reach temperatures high enough to ignite soot trapped in the soot particulate filter 14. Typically, the turbocharger 26 includes a compressor 28 and a turbine 30. In this illustrative embodiment, the turbocharger 26 is located downstream of the engine 12. An inlet 32 of turbine 30 receives the exhaust gases flowing from engine 12, which causes the turbine 30 to rotate. The exhaust gases exit the turbine 30 through outlet 31 and continue to move downstream to the soot abatement assembly 14. The motion of the turbine 30 causes the compressor 28 to pull in air through intake 33 and send compressed air through outlet 34 and into the combustion chamber 13 of engine 12.

The turbocharger 26 can be selectively operated during times when the particulate filter 18 needs to be regenerated. Specifically, the controller 25 may be used to selectively operate the turbocharger 26 through a control line 23. As described in FIG. 1, the controller 25 may determine if the filter 18 needs regenerated based upon input from sensors, such as the sensor 29, used in the emission abatement system 10 allowing the controller 25 to operate the turbocharger 26 at the appropriate times. It should be appreciated that the decision to regenerate the particulate filter can be a time-based decision, as previously described herein.

During the periods of filter regeneration, the turbocharger 26 sends compressed air into the combustion chamber 13 of the engine 12. This causes more oxygen to be present in the exhaust gases exiting the engine 12 than would otherwise be present without operating the turbocharger 26. The increased level of oxygen allows the fuel-fired burner 16 to heat the exhaust gases to a temperature high enough to regenerate the soot particulate filter 18. It should be appreciated that the turbocharger 26 may be a variable-speed or single-speed unit. A variable-speed unit allows the rate of compressed air being supplied to the combustion chamber 13 to be controlled over an operating range, whereas a single-speed unit supplies compressed air at a constant rate.

It should be appreciated that the engine 12 may include a number of combustion chambers 13 as is typically found in diesel engines. In FIG. 1, the engine 12 may be configured to allow the recirculated exhaust gases to be supplied to each combustion chamber 13, with the valve 24 reducing the amount of exhaust gases supplied to each combustion chamber 13. In FIG. 2, the engine 12 may be configured to allow the compressed air supplied by the turbocharger 26 to reach each combustion chamber 13.

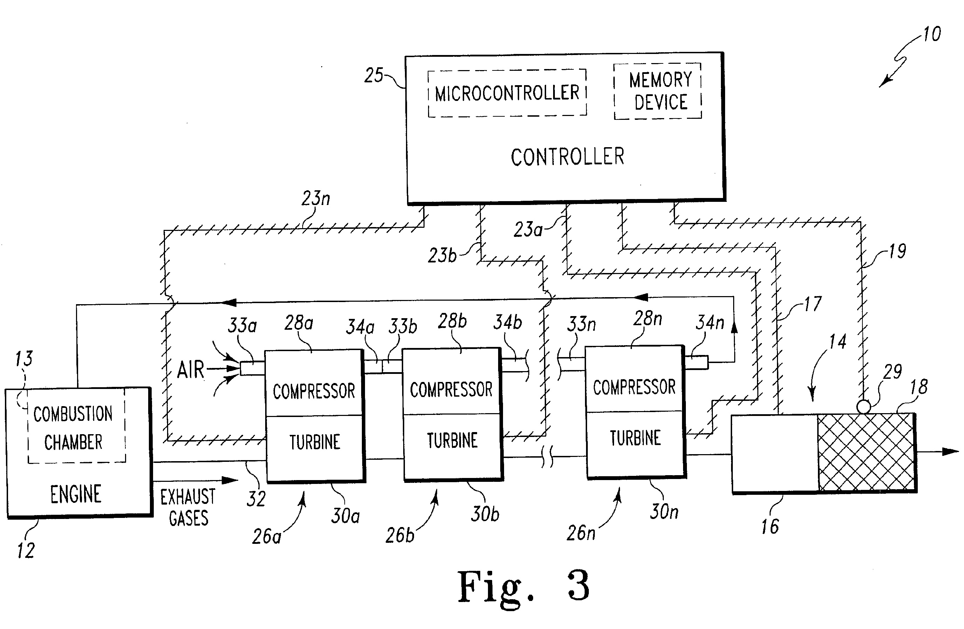

FIG. 3 shows an exemplary emission abatement system 10 implementing turbochargers 26a through 26n. In this exemplary embodiment, multiple turbochargers 26 are serially connected such that the outlet 34 of each compressor 28 is connected to an inlet 33 of an adjacent compressor 28 as shown in FIG. 3. Compressor 28a is shown as having an outlet 34a coupled to inlet 33b of compressor 28b.

During operation, all the turbochargers 26 can be operated such that air is first drawn into the inlet 34a of the compressor 28a. The air moves through each compressor 28 such that it is continuously compressed as it moves through. Eventually, the compressed air exits outlet 34n of turbocharger 26n and into the combustion chamber 13. Thus, the configuration shown in FIG. 3 can be used to supply air to the fuel-fired burner 16 for regeneration of the filter 18 in a manner similarly described in regard to FIG. 2.

As the exhaust gases exit the engine 12, they pass through each turbine 30. Each turbocharger 26 includes a control line 23, which can be used to selectively operate each turbocharger 26 independently. As described in FIG. 2, each turbocharger may be a variable-speed or single-speed unit and controlled accordingly. In a configuration using variable-speed turbochargers 26, each turbine 30 can be independently operated so that the amount of "boost" provided by the turbochargers 26 to the engine 12 can be more particularly controlled.

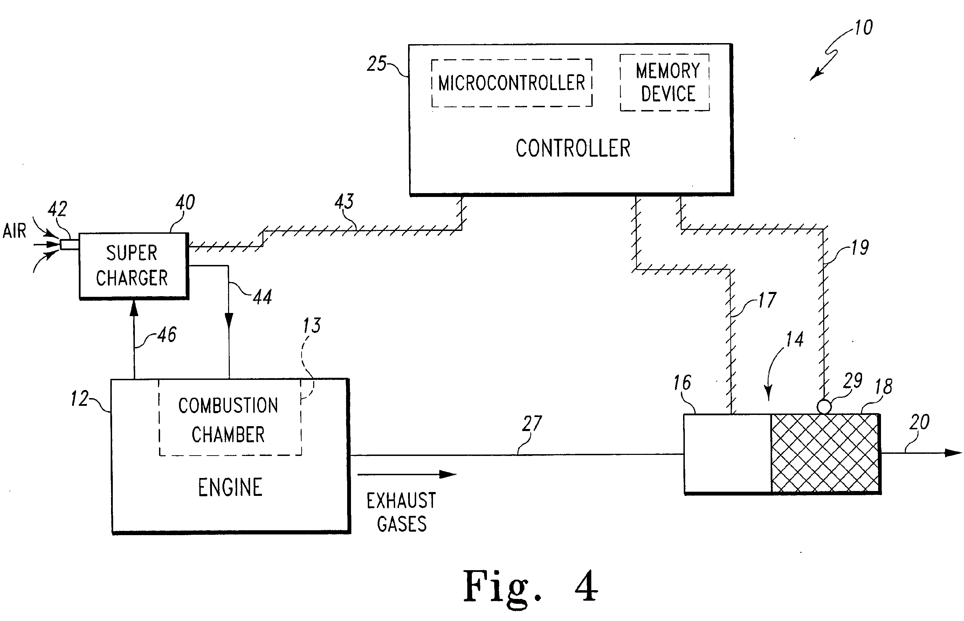

FIG. 4 shows another exemplary embodiment of an emission abatement assembly 10 implementing a supercharger 40. Supercharger 40 includes an inlet 42 which draws in air and is compressed therein and subsequently expelled through an outlet 44. In FIG. 4, the supercharger 40 is configured to provide oxygen to the combustion chamber 12 of an internal combustion engine 12, which can be subsequently provided to the fuel-fired burner 16 for regeneration of the filter 18. In one exemplary embodiment, the engine 12 is gasoline-powered.

The supercharger 40 can be operated mechanically or electrically by the engine 12 as indicated by arrow 46. For example, in one exemplary embodiment the supercharger 40 can include a belt-driven air pump (not shown) using rotational motion provided by the engine for rotating the belt. In another exemplary embodiment, the supercharger 40 includes an electrically-driven pump (not shown), which can receive power from a source within an engine, such as from a battery. It should be appreciated that the supercharger 40 may be a variable-speed or single-speed unit. A variable-speed unit allows the rate of compressed air being supplied to the combustion chamber 13 to be controlled over an operating range, whereas a single-speed unit supplies compressed air at a constant rate.

Control line 43 can provide control signals to the supercharger 40 from the controller 25, allowing the supercharger to be selectively operated such as at times when regeneration of the filter 18 is desired. It should be appreciated that the supercharger 40 may be a variable-speed or single-speed unit. A variable-speed unit allows the rate of compressed air being supplied to the combustion chamber 13 to be controlled over an operating range, whereas a single-speed unit supplies compressed air at a constant rate.

It should be appreciated that the methods disclosed herein can be applied to other emission abatement components other than particulate filters. For example, the emission abatement assembly 10 can use a device for abating oxides of nitrogen (NOx), such as a selective catalytic reduction (SCR) catalyst. Typically, the efficiency of NOx abatement devices can be increased by raising the temperature of the exhaust gases flowing therethrough. Accordingly, the fuel-fired burner 16 can be operated in the various manners disclosed herein to raise exhaust gas temperature. Furthermore, the oxygen content present in the exhaust gases can be adjusted in the various manners disclosed herein for supplying desired amounts of oxygen to the burner 16 for combustion. This allows the temperature of the exhaust gases to be raised before reaching a NOx abatement device disposed downstream of the burner 16.

## Claims

1. A method of operating an emission abatement assembly, comprising the steps of:
determining if a predetermined condition of an emission abatement component exists and generating a signal in response thereto,
adjusting the operation of an internal combustion engine to increase the oxygen content in exhaust gases generated by the engine in response to the generation of the signal,
advancing the exhaust gases to a fuel-fired burner,
generating heat with the fuel-fired burner to heat the exhaust gases, and
advancing the heated exhaust gases to the emission abatement component.

2. The method of claim 1, wherein the determining step comprises determining if a particulate filter needs to be regenerated and generating a signal in response thereto and wherein the heat generated with the fuel-fired burner is used to combust soot trapped in a particulate filter.

3. The method of claim 2, wherein the determining step comprises measuring the pressure drop across the particulate filter to determine that the particulate filter needs regenerated.

4. The method of claim 2, wherein the adjusting step comprises reducing an amount of recirculated exhaust gases entering a combustion chamber of the engine in response to the generation of the signal to increase the oxygen content in the exhaust gases generated by the engine, preferably the adjusting step further comprises operating an EGR valve in response to the generation of the signal to reduce the amount of recirculated exhaust gases entering the combustion chamber of the engine, and operating the EGR valve with a controller in response to the generation of the signal to reduce the amount of recirculated exhaust gases entering the combustion chamber of the engine.

5. The method of claim 2, wherein the adjusting step comprises operating one of a supercharger or a turbocharger to supply air to a combustion chamber of the engine in response to the generation of the signal to increase oxygen content in the exhaust gases generated by the engine.

6. An emission abatement assembly, comprising:
an internal combustion engine (12),
a particulate filter (18),
a fuel-fired burner (16) positioned upstream of the particulate filter (18), the fuel-fired burner (16) having an input that receives exhaust gases generated by the internal combustion engine (12), and
a controller (25) electrically coupled to the internal combustion engine (12) and the fuel-fired burner (16), the controller comprising a processor, and a memory device electrically coupled to the processor, the memory device having stored therein a plurality of instructions which, when executed by the processor, cause the processor to:
determine if the particulate filter (18) needs to be regenerated and generate a control signal in response thereto,
adjust the operation of the internal combustion engine (12) to increase the oxygen content in exhaust gases generated by the engine in response to the generation of the control signal, and
operate the fuel-fired burner (16) to generate heat to combust soot trapped in the particulate filter (18) in response to the generation of the control signal.

7. The emission abatement assembly of claim 6 further comprising a sensor (29), wherein the plurality of instructions, when executed by the processor, further cause the processor to determine if the particulate filter (18) needs to be regenerated by measuring the pressure drop across the particulate filter with the sensor (29).

8. The emission abatement assembly of claim 6 further comprising an EGR valve (24), wherein the plurality of instructions, when executed by the processor, further cause the processor to adjust the operation of the internal combustion engine (12) by operating the EGR valve (24) in response to the generation of the control signal to reduce the amount of recirculated exhaust gases entering the combustion chamber of the engine.

9. The emission abatement assembly of claim 6 further comprising one of a supercharger or a turbocharger (26), wherein the plurality of instructions, when executed by the processor, further cause the processor to adjust the operation of the engine (12) by operating the one of the supercharger or turbocharger (26) to supply air to a combustion chamber of the engine in response to the generation of the control signal to increase oxygen content in the exhaust gases generated by the engine (12).

10. The emission abatement assembly of claim 6, wherein the fuel-fired burner (16) is operated without a supplemental air supply.

11. The method of claim 1, wherein the determining step comprises determining if a predetermined condition of one of a NOx abatement device or particulate filter exists and generating a signal in response thereto.

12. The method of claim 1, wherein the advancing step comprises providing an exhaust line between the engine and the fuel-fired burner that defines an exhaust gas path, and feeding the engine exhaust gases into the fuel-fired burner through the exhaust line.

13. The method of claim 1, wherein the fuel-fired burner only receives oxygen from exhaust gases generated by the engine.

14. The emission abatement assembly of claim 6, including an exhaust line (27) fluidly connecting the internal combustion engine (12) to the inlet of the fuel-fired burner (16), and wherein the exhaust gases are fed into the fuel-fired burner (16) through the exhaust line (27).

15. The emission abatement assembly of claim 6, wherein the fuel-fired burner (16) only receives oxygen from exhaust gases generated by the internal combustion engine (12).

## Patentansprüche

1. Verfahren zum Betreiben einer Emissionsminderungsbaugruppe, das die folgenden Schritte umfasst:
Feststellen, ob eine vorbestimmte Bedingung einer Emissionsminderungs-komponente vorliegt, und Erzeugen eines Signals als Reaktion darauf,
Anpassen des Betriebs eines Verbrennungsmotors zur Erhöhung des Sauerstoffgehalts in von dem Motor erzeugten Abgasen als Reaktion auf die Erzeugung des Signals,
Vorbewegen der Abgase zu einem kraftstoffbetriebenen Brenner,
Erzeugen von Wärme mit dem kraftstoffbetriebenen Brenner zur Erwärmung der Abgase und
Vorbewegen der erwärmten Abgase zu der Emissionsminderungskomponente.

2. Verfahren nach Anspruch 1, wobei bei dem Feststellungsschritt festgestellt wird, ob ein Partikelfilter regeneriert werden muss, und als Reaktion darauf ein Signal erzeugt wird, und wobei die mit dem kraftstoffbetriebenen Brenner erzeugte Wärme zur Verbrennung von in einem Partikelfilter angelagertem Ruß verwendet wird.

3. Verfahren nach Anspruch 2, wobei bei dem Feststellungsschritt der Druckabfall über den Partikelfilter gemessen wird, um festzustellen, dass der Partikelfilter regeneriert werden muss.

4. Verfahren nach Anspruch 2, wobei bei dem Anpassungsschritt eine Menge an rückgeführten Abgasen, die in eine Verbrennungskammer des Motors eintreten, als Reaktion auf die Erzeugung des Signals verringert wird, um den Sauerstoffgehalt in den vom Motor erzeugten Abgasen zu erhöhen, wobei bei dem Anpassungsschritt vorzugsweise ferner als Reaktion auf die Erzeugung des Signals ein AGR-Ventil betätigt wird, um die Menge an rückgeführten Abgasen, die in die Verbrennungskammer des Motors eintreten, zu verringern, und das AGR-Ventil als Reaktion auf die Erzeugung des Signals mit einem Steuergerät betätigt wird, um die Menge an rückgeführten Abgasen, die in die Verbrennungskammer des Motors eintreten, zu verringern.

5. Verfahren nach Anspruch 2, wobei bei dem Anpassungsschritt ein Lader oder ein Turbolader betätigt wird, um einer Verbrennungskammer des Motors als Reaktion auf die Erzeugung des Signals Luft zuzuführen, um den Sauerstoffgehalt in den vom Motor erzeugten Abgasen zu erhöhen.

6. Emissionsminderungsbaugruppe, mit:
einem Verbrennungsmotor (12),
einem Partikelfilter (18),
einem kraftstoffbetriebenen Brenner (16), der stromaufwärts des Partikelfilters (18) positioniert ist, wobei der kraftstoffbetriebene Brenner (16) einen Eingang aufweist, der von dem Verbrennungsmotor (12) erzeugte Abgase empfängt, und
einem Steuergerät (25), das mit dem Verbrennungsmotor (12) und dem kraftstoffbetriebenen Brenner (16) elektrisch gekoppelt ist, wobei das Steuergerät einen Prozessor und eine Speichervorrichtung umfasst, die mit dem Prozessor elektrisch gekoppelt ist, wobei in der Speichervorrichtung mehrere Befehle gespeichert sind, die bei Ausführung durch den Prozessor bewirken, dass der Prozessor:
feststellt, ob der Partikelfilter (18) regeneriert werden muss, und als Reaktion darauf ein Steuersignal erzeugt,
den Betrieb des Verbrennungsmotors (12) so anpasst, dass als Reaktion auf die Erzeugung des Steuersignals der Sauerstoffgehalt in von dem Motor erzeugten Abgasen erhöht wird, und
den kraftstoffbetriebenen Brenner (16) betätigt, um als Reaktion auf die Erzeugung des Steuersignals Wärme zur Verbrennung von im Partikelfilter (18) angelagertem Ruß zu erzeugen.

7. Emissionsminderungsbaugruppe nach Anspruch 6, ferner mit einem Sensor (29), wobei die mehreren Befehle bei Ausführung durch den Prozessor ferner bewirken, dass der Prozessor feststellt, ob der Partikelfilter (18) regeneriert werden muss, indem mit dem Sensor (29) der Druckabfall über den Partikelfilter gemessen wird.

8. Emissionsminderungsbaugruppe nach Anspruch 6, ferner mit einem AGR-Ventil (24), wobei die mehreren Befehle bei Ausführung durch den Prozessor ferner bewirken, dass der Prozessor als Reaktion auf die Erzeugung des Steuersignals zur Verringerung der Menge an rückgeführten Abgasen, die in die Verbrennungskammer des Motors eintreten, durch Betätigung des AGR-Ventils (24) den Betrieb des Verbrennungsmotors (12) anpasst.

9. Emissionsminderungsbaugruppe nach Anspruch 6, ferner mit einem Lader oder einem Turbolader (26), wobei die mehreren Befehle bei Ausführung durch den Prozessor ferner bewirken, dass der Prozessor durch Betätigung des Laders oder Turboladers (26) den Betrieb des Motors (12) anpasst, damit als Reaktion auf die Erzeugung des Steuersignals einer Verbrennungskammer des Motors Luft zugeführt wird, um den Sauerstoffgehalt in den vom Motor (12) erzeugten Abgasen zu erhöhen.

10. Emissionsminderungsbaugruppe nach Anspruch 6, wobei der kraftstoffbetriebene Brenner (16) ohne zusätzliche Luftzufuhr betrieben wird.

11. Verfahren nach Anspruch 1, wobei bei dem Feststellungsschritt festgestellt wird, ob eine vorbestimmte Bedingung einer NOx-Minderungsvorrichtung oder eines Partikelfilters vorliegt, und als Reaktion darauf ein Signal erzeugt wird.

12. Verfahren nach Anspruch 1, wobei bei dem Schritt des Vorbewegens eine Abgasleitung zwischen dem Motor und dem kraftstoffbetriebenen Brenner bereitgestellt wird, die einen Abgaspfad definiert, und die Motorabgase durch die Abgasleitung in den kraftstoffbetriebenen Brenner geführt werden.

13. Verfahren nach Anspruch 1, wobei der kraftstoffbetriebene Brenner nur Sauerstoff aus vom Motor erzeugten Abgasen erhält.

14. Emissionsminderungsbaugruppe nach Anspruch 6, die eine Abgasleitung (27) aufweist, über die der Verbrennungsmotor (12) mit dem Einlass des kraftstoffbetriebenen Brenners (16) in Strömungsverbindung steht, und wobei die Abgase durch die Abgasleitung (27) in den kraftstoffbetriebenen Brenner (16) geführt werden.

15. Emissionsminderungsbaugruppe nach Anspruch 6, wobei der kraftstoffbetriebene Brenner (16) nur Sauerstoff aus von dem Verbrennungsmotor (12) erzeugten Abgasen erhält.

## Revendications

1. Procédé pour actionner un ensemble de réduction d'émission, comprenant les étapes consistant à :
déterminer si une condition prédéterminée d'un composant de réduction d'émission existe et générer un signal en réponse à cela,
ajuster le fonctionnement d'un moteur à combustion interne pour augmenter la teneur en oxygène dans les gaz d'échappement générés par le moteur en réponse à la génération du signal,
faire avancer les gaz d'échappement jusqu'à un brûleur de combustion,
générer de la chaleur avec le brûleur de combustion afin de chauffer les gaz d'échappement, et
faire avancer les gaz d'échappement chauffés jusqu'au composant de réduction d'émission.

2. Procédé selon la revendication 1, dans lequel l'étape de détermination comprend l'étape consistant à déterminer si un filtre à particules doit être régénéré et générer un signal en réponse à cela et dans lequel la chaleur générée avec le brûleur de combustion est utilisée pour brûler la suie piégée dans un filtre à particules.

3. Procédé selon la revendication 2, dans lequel l'étape de détermination comprend l'étape consistant à mesurer la chute de pression sur le filtre à particules afin de déterminer que le filtre à particules doit être régénéré.

4. Procédé selon la revendication 2, dans lequel l'étape d'ajustement comprend l'étape consistant à réduire une quantité de gaz d'échappement recirculés entrant dans une chambre de combustion du moteur en réponse à la génération du signal pour augmenter la teneur en oxygène dans les gaz d'échappement générés par le moteur, de préférence l'étape d'ajustement comprend en outre l'étape consistant à actionner une soupape EGR en réponse à la génération du signal afin de réduire la quantité de gaz d'échappement recirculés entrant dans la chambre de combustion du moteur, et l'étape consistant à actionner la soupape EGR avec un organe de commande en réponse à la génération du signal pour réduire la quantité de gaz d'échappement recirculés entrant dans la chambre de combustion du moteur.

5. Procédé selon la revendication 2, dans lequel l'étape d'ajustement comprend l'étape consistant à actionner l'un parmi un compresseur d'alimentation ou un compresseur à suralimentation pour amener de l'air à une chambre de combustion du moteur en réponse à la génération du signal pour augmenter la teneur en oxygène dans les gaz d'échappement générés par le moteur.

6. Ensemble de réduction d'émission comprenant :
un moteur à combustion interne (12) ;
un filtre à particules (18) ;
un brûleur de combustion (16) positionné en amont du filtre à particules (18), le brûleur de combustion (16) ayant une entrée qui reçoit des gaz d'échappement générés par le moteur à combustion interne (12), et
un organe de commande (25) électriquement couplé au moteur à combustion interne (12) et au brûleur de combustion (16), l'organe de commande comprenant un processeur et un dispositif de mémoire électriquement couplé au processeur, le dispositif de mémoire ayant, mémorisées à l'intérieur de ce dernier, une pluralité d'instructions qui, lorsqu'elles sont exécutées par le processeur, amènent le processeur à :
déterminer si le filtre à particules (18) doit être régénéré et générer un signal de commande en réponse à cela,
ajuster le fonctionnement du moteur à combustion interne (12) pour augmenter la teneur en oxygène dans les gaz d'échappement générés par le moteur en réponse à la génération du signal de commande, et
actionner le brûleur de combustion (16) pour générer de la chaleur afin de brûler la suie piégée dans le filtre à particules (18) en réponse à la génération du signal de commande.

7. Ensemble de réduction d'émission selon la revendication 6, comprenant en outre un capteur (29), dans lequel la pluralité d'instructions, lorsqu'elles sont exécutées par le processeur, amènent en outre le processeur à déterminer si le filtre à particules (18) doit être régénéré en mesurant la chute de pression sur le filtre à particules avec le capteur (29).

8. Ensemble de réduction d'émission selon la revendication 6, comprenant en outre une soupape EGR (24), dans lequel la pluralité d'instructions, lorsqu'elles sont exécutées par le processeur, amènent en outre le processeur à ajuster le fonctionnement du moteur à combustion interne (12) en actionnant la soupape EGR (24) en réponse à la génération du signal de commande pour réduire la quantité de gaz d'échappement recirculés entrant dans la chambre de combustion du moteur.

9. Ensemble de réduction d'émission selon la revendication 6, comprenant en outre l'un parmi un compresseur d'alimentation ou un compresseur à suralimentation (26), dans lequel la pluralité d'instructions, lorsqu'elles sont exécutées par le processeur, amènent en outre le processeur à ajuster le fonctionnement du moteur (12) en actionnant l'un parmi le compresseur d'alimentation ou le compresseur à suralimentation (26) pour amener de l'air dans une chambre de combustion du moteur en réponse à la génération du signal de commande afin d'augmenter la teneur en oxygène dans les gaz d'échappement générés par le moteur (12).

10. Ensemble de réduction d'émission selon la revendication 6, dans lequel le brûleur de combustion (16) est actionné sans alimentation en air supplémentaire.

11. Procédé selon la revendication 1, dans lequel l'étape de détermination comprend les étapes consistant à déterminer si une condition prédéterminée de l'un parmi un dispositif de réduction d'oxydes d'azote ou un filtre à particules existe et générer un signal en réponse à cela.

12. Procédé selon la revendication 1, dans lequel l'étape d'avancement comprend les étapes consistant à prévoir une conduite d'échappement entre le moteur et le brûleur de combustion qui définit une trajectoire de gaz d'échappement, et amener les gaz d'échappement du moteur dans le brûleur à combustion par la conduite d'échappement.

13. Procédé selon la revendication 1, dans lequel le brûleur de combustion ne reçoit que l'oxygène des gaz d'échappement générés par le moteur.

14. Ensemble de réduction d'émission selon la revendication 6, comprenant une conduite d'échappement (27) raccordant de manière fluide le moteur à combustion interne (12) à l'entrée du brûleur de combustion (16), et dans lequel les gaz d'échappement sont amenés dans le brûleur de combustion (16) par la conduite d'échappement (27).

15. Ensemble de réduction d'émission selon la revendication 6, dans lequel le brûleur de combustion (16) ne reçoit que l'oxygène des gaz d'échappement générés par le moteur à combustion interne (12).
